# EUROPEAN PATENT APPLICATION

(11) **EP 4 541 201 A1**
(43) Date of publication of application: **23.04.2025**
(21) Application number: 24207625.5
(22) Date of filing: 18.10.2024
(51) Int. Cl.: A23C 11/10, A23L 2/52, A23L 2/84, A23L 7/104, A23J 1/12

(54) **PRODUCTION OF OAT-BASED PRECURSORS**

(30) Priority: 18.10.2023 EP 23204428
(71) Applicant: Tetra Laval Holdings & Finance S.A., 1009 Pully (CH)
(72) Inventor: Magnusson, Andreas, 22186 Lund (SE)
(74) Representative: Tetra Pak - Patent Attorneys SE

(57) **Abstract**

The present invention relates to a method (100) of producing a first oat-based precursor (LF1) and a second oat-based precursor (LF2). The method (100) comprising: preparing (104) a first slurry (S1) by mixing at least an oat material (O) and water (W), treating (108) the first slurry (S1) with a first enzyme (E1), separating (112) the treated first slurry (TS1) into a first solid fraction (SF1), and a first liquid fraction (LF1) that forms the first oat-based precursor (LF1), preparing (116) a second slurry (S2) by mixing the first solid fraction (SF1) with one or more of a second enzyme (E2) and water (W), separating (120) the second slurry (S2) into a second solid fraction (SF2), and a second liquid fraction (LF2) that forms the second oat-based precursor (LF2). A system (200) for producing a first oat-based precursor (LF1) and a second oat-based precursor (LF2) is also provided.

## Description

### Technical Field

The invention relates to a method of producing a first oat-based precursor and a second oat-based precursor. The method includes preparing a slurry by mixing an oat material and water and treating the slurry with an enzyme. A system for producing a first oat-based precursor and a second oat-based precursor is also provided.

### Background Art

Plant-based liquid food products have been growing in popularity in recent years. Plant-based liquid food products include oat-based beverages, such as milk-like products and yoghurt-like products. Oat-based beverages of various kinds have gained significant popularity mainly due to their nutritional value, health aspects and environmental sustainability. Oat-based beverages are also popular due to their flavor and consistency.

When fabricating oat-based beverages a pre-stage of the final product fabricated from oats is commonly blended with different ingredients to form the actual or final oat-based beverages. Such pre-stage is commonly referred to as a precursor or pre-form. In other words, the precursor is generally the actual oat-containing ingredient of an oat-based beverage meaning that the quality and composition of the precursor is crucial when it comes to the quality and taste of the final oat-based beverage. Oat-based precursors can also be used for fabrication of other types of oat-based products.

Further, oat-based precursors can be prefabricated and thereafter blended at a blending site different from the fabrication site. On the other hand, oat-based precursors can be fabricated in-line when fabricating an oat-based product such as an oat-based beverage.

When fabricating an oat-based precursor, oat material such as oats are typically mixed with water and subjected to an enzyme. The precursor is then extracted from the oat-water mix in form of a liquid, where the liquid includes constituents of the oats such as proteins and sugars. When extracting such liquid precursor, the solid content or fiber fraction of the oat-water mix is generally regarded as a waste product. This means that the solid content is typically discarded or used as animal feed.

Despite attempts to produce precursors having higher concentrations of desired constituents there is still room for improvement when it comes to producing oat-based precursors.

### Summary

With the above in mind, it is an object of the present invention to provide an improved method of producing a first oat-based precursor and a second oat-based precursor as well as a system for producing a first oat-based precursor and a second oat-based precursor.

Another object is to provide such a method and system which are more efficient in terms of yield when it comes to producing the oat-based precursors.

Another object is to provide such a method and system which results in a reduced amount of waste.

Another object is to provide such a method and system which allows for a more efficient use of oats.

Another object is to provide such a method and system which are more cost-efficient.

To achieve at least one of the above objects and also other objects that will be evident from the following description, a method of producing a first oat-based precursor and a second oat-based precursor, having the features defined in claim 1 is provided according to the present inventive concept. A system for producing a first oat-based precursor and a second oat-based precursor, is provided according to claim 12. Preferred variations of the inventive concept will be evident from the dependent claims.

More specifically, according to a first aspect, there is provided a method of producing a first oat-based precursor and a second oat-based precursor, the method comprising: preparing a first slurry by mixing at least an oat material and water, treating the first slurry with a first enzyme, separating the treated first slurry into a first solid fraction, and a first liquid fraction that forms the first oat-based precursor, preparing a second slurry by mixing the first solid fraction with one or more of a second enzyme and water, separating the second slurry into a second solid fraction, and a second liquid fraction that forms the second oat-based precursor.

As used herein, a first enzyme should be understood as one of more enzymes that are used for the enzyme treatment of the first slurry. Thus, the first enzyme may be a first group of enzymes that comprises one or more individual enzymes. Correspondingly, as used herein, a second enzyme should be understood as one of more enzymes that are used for the enzyme treatment of the second slurry. Thus, the second enzyme may be a second group of enzymes that comprises one or more individual enzymes.

Hereby an improved method of producing a first oat-based precursor and a second oat-based precursor is provided.

Thus, the present invention is based on the realization that it has surprisingly been found that the first solid fraction or solid content, generally regarded as waste or animal feed, may be used to produce a second oat-based precursor which is useful for producing human foodstuff. In other words, surprisingly it has been found that what generally is regarded as waste may be used to produce a precursor including desired constituents, such as proteins, while significantly increasing the overall yield of the oat material used. I particular it has surprisingly been found that proteins may be extracted from the first solid fraction.

The method is carefully tailored to produce a first oat-based precursor and a second oat-based precursor and is hence developed to increase the overall yield of the oat material used in the method.

A significant advantage resides in that the increased yield of the oat material results in that the valuable proteins of the oat material may be utilized to significantly larger degree and not wasted to the extent of prior art methods.

Another significant advantage resides in that the increased yield of the oat material results in that the valuable carbohydrates, including sugars, of the oat material may be utilized to significantly larger degree and not wasted to the extent of prior art methods.

Hence, the present method allows for that the oat material is used in a more sustainable way as compered to prior art methods of forming oat-based precursors.

The method includes preparing a first slurry by mixing at least an oat material and water. The formed slurry is then treated with a first enzyme and separated into a first solid fraction and a first liquid fraction that forms the first oat-based precursor.

According to the present method the first solid fraction, generally considered as waste by prior art methods, is then used to prepare a second slurry by mixing the first solid fraction with one or more of a second enzyme and water. The second slurry is separated into a second solid fraction, and a second liquid fraction that forms the second oat-based precursor. Hence, more valuable constituents of the oat material may be used in a sustainable way by using the second oat-based precursor. The second oat-based precursor may for instance be used to produce oat-based beverages.

The method may further comprise mixing the first oat-based precursor and the second oat-based precursor with one or more ingredients to form an oat-based beverage, which is advantageous in that more valuable constituents of the oat material may be used when forming an oat-based beverage. Hence, not only the first oat-based precursor but also the second oat-based precursor may be used in the same oat-based beverage while significantly improving the overall yield of the method. In other words, a high standard high-quality oat-based beverage which includes a larger portion of the proteins in the oat material may be formed.

The separating of the treated first slurry into the first solid fraction and the first liquid fraction may be performed at a first separation station.

The first separation station may comprise a centrifugal separator, such as a decanter.

The first separation station may comprise a decenter.

The first separation station may be a decenter.

The separating of the second slurry into the second solid fraction and the second liquid fraction may be performed at a second separation station that is different from the first separation station, which is advantageous in that a different separation technology or technique may be used in the second separation station as compared to the first separation station. Hence, the first separation station and the second separation station may be optimized individually such that the overall yield of the oat material is further increased. For instance, the first separation station may be tailored or optimized to extract as much proteins and/or sugars as possible form the threated first slurry whereas the second separation station may be tailored or optimized toe extract as much proteins as possible from the second slurry.

The second separation station may comprise a mechanical dewatering press, such as a screw press, which is advantageous in that the second separation station may be optimized to the properties of the second slurry. The second slurry is typically thicker than the first treated slurry meaning that it is advantageous to use a mechanical dewatering press in the second separation station. By "mechanical dewatering press" is here meant any type of press or similar which is capable of pressing or compacting the second slurry such that the second liquid fraction is squeezed or pressed out of the second slurry. Hence, the mechanical dewatering press does for instance not use a centrifugal force or sedimentation to separate the second slurry. In one embodiment, the second separation station may comprise a decanter.

The second separation station may comprise a screw press.

The second separation station may be a screw press.

The separating of the second slurry into the second solid fraction and the second liquid fraction may be performed at the first separation station, which is advantageous in that one and a same process equipment may be used to separate the threated first slurry and the second slurry. Hence, the overall cost of realizing the method may be significantly reduced as compared to when a first separation station and a second separation station are used. When the threated first slurry and the second slurry are both separated in the first separation station, the respective separations are to advantage run in a batch type fashion or batch process. Hence, the threated first slurry is separated and thereafter the second slurry is separated using the same separation station, i.e., the first separation station.

The treating of the first slurry with a first enzyme, or with a first group of enzymes, may comprise treating the first slurry with one or more of alfa amylase, beta amylase and glucosidase, which is advantageous in that the viscosity of the first slurry may be reduced such that the treated first slurry may be separated into the first solid fraction, and a first liquid fraction that forms the first oat-based precursor in an efficient way. The first enzyme may typically break apart or split constituents of the oat material such that e.g. proteins and sugars may be separated from e.g. fibers and other solid content of the oat material of the first slurry.

The preparing of the second slurry may comprise mixing the first solid fraction with one or more of a cellulase and/or protease, which is advantageous in that material of the first solid fraction may break apart or split such that further valuable constituents e.g., in form of proteins and/or sugars may be separated from fibers and other solid content of the first solid fraction of the second slurry. Hence, by mixing or treating the first solid fraction with a second enzyme including one or more of a cellulase and protease when preparing the second slurry the overall yield of the oat material may be further increased.

The first slurry may have a protein concentration of 0,3wt% - 4wt%, preferably 1wt% - 3wt%, and the second slurry may have a protein concentration of 5wt% - 20wt%, preferably 8wt% - 17wt%. Hence, a significant amount of proteins may to advantage be extracted also from the second slurry which is based on the first solid fraction which generally is considered as waste.

The first slurry may have a protein concentration of 0,3wt% - 4wt%, preferably 1wt% - 3wt%.

The second slurry may have a protein concentration of 5wt% - 20wt%, preferably 8wt% - 17wt%.

The first liquid phase may have a protein concentration of 0,6wt% - 2wt%, preferably 0,8wt% - 1,1wt%, and the second liquid phase may have a protein concentration of 4wt% - 10wt%, preferably 5wt% - 8wt%. Hence, a significant amount of proteins may to advantage be included in the second liquid phase which emanates from first solid fraction which generally is considered as waste.

The first liquid phase may have a protein concentration of 0,6wt% - 2wt%, preferably 0,8wt% - 1,1wt%.

The second liquid phase may have a protein concentration of 4wt% - 10wt%, preferably 5wt% - 8wt%.

A solid content of the second solid fraction may be larger than a solid content of the first solid fraction. Typically, a solid content of the second solid fraction may be 7-13%, or about 10%, larger than a solid content of the first solid fraction. Hence, the second solid fraction may be more concentrated than the first solid fraction in terms of solid materials. The solid content of the second solid fraction may be about three times as high as the solid content of the first solid fraction. The solid content of the second solid fraction may be about two times as high as the solid content of the first solid fraction. The solid content of the second solid fraction may be about four times as high as the solid content of the first solid fraction.

According to a second aspect, there is provided a system for producing a first oat-based precursor and a second oat-based precursor, the system comprising: a first mixing station, configured to prepare a first slurry by mixing at least an oat material and water, a first treatment station, configured to treat the first slurry with a first enzyme, a first separation station, configured to separate the treated first slurry into a first solid fraction, and a first liquid fraction that forms the first oat-based precursor, a second mixing station, configured to prepare a second slurry by mixing the first solid fraction with one or more of a second enzyme and water, a second separation station configured to separate the second slurry into a second solid fraction, and a second liquid fraction that forms the second oat-based precursor.

Hereby an improved system for producing a first oat-based precursor and a second oat-based precursor is provided.

In general, the above-mentioned features and advantages of the first aspect, when applicable, apply to this second aspect as well. In order to avoid undue repetition, reference is made to the above.

The first mixing station and the first treatment station may be the same station. In other words, the mixing of the oat material and water, and the treatment of the first slurry with the first enzyme may be performed in the same station. In yet other words, the mixing of the oat material and water, and the treatment of the first slurry with the first enzyme may be performed in the vessel, mixer, tank or similar.

The system may further comprise a blending station, configured to blend the first oat-based precursor and the second oat-based precursor with one or more ingredients to form an oat-based beverage.

The second separation station and the first separation station may be the same separation station.

The first separation station may comprise a centrifugal separator, such as a decanter, and/or the second separation station may comprise a mechanical dewatering press, such a screw press.

The first separation station may comprise a decenter.

The first separation station may be a decenter.

The second separation station may comprise a screw press.

The second separation station may be a screw press.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such system may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief Description of the Drawings

The above and other aspects of the present inventive concept will now be described in more detail, with reference to the appended drawings The drawings should not be considered limiting; instead they are used for explaining and understanding.

As illustrated in the drawings are provided for illustrative purposes and, thus, are provided to illustrate the general structures of embodiments. Like reference numerals refer to like elements throughout.
Fig. 1 is a schematical view of an exemplary system for producing a first oat-based precursor and a second oat-based precursor.
Fig. 2 is a schematical view of a variation to the exemplary system of Fig. 1 according to an embodiment.
Fig. 3 is a flow chart showing an exemplary method of producing a first oat-based precursor and a second oat-based precursor according to an embodiment of the invention.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

As have been mentioned above, the present invention is based on the realization that it has surprisingly been found that the first solid fraction or fiber fraction, generally regarded as waste or animal feed, may be used to produce a second oat-based precursor which is useful for producing human foodstuff. In particular it has surprisingly been found that proteins may to advantage be extracted from the first solid fraction or fiber fraction. The first solid fraction or fiber fraction is in this context typically what remains after having removed a liquid fraction from an enzyme treated slurry prepared by mixing at least an oat material and water. The preparation on such slurry and such first solid fraction or fiber fraction will be described in greater detail below.

However, before describing the method and system according to the present invention in detail, general tests performed to demonstrate the potential of the inventive concept will be described first to increase the overall understanding of the present inventive concept and to clearly convey the great potential of the present inventive concept to the skilled reader.

A series of tests have been performed according to below to prove the potential of the inventive concept.

All tests below have been performed on a solid fraction, sometimes not completely correctly referred to as okara, leaving a decanter of a state-of-the-art oat-based precursor or oat-based production line. The solid fraction used in the below tests is consequently comparable to the first solid fraction SF1 of the present invention. The solid fraction leaving the decanter was extracted from an enzyme treated slurry prepared by mixing grinded oat kernels and water according to a state-of-the-art process. The solid fraction leaving the decanter is dough-like and does not only include solids but also water. The exact composition of the solid fraction has not been determined. What is important is that the solid fraction leaving the decanter is generally considered as waste and consequently commonly wasted, burnt or fed to animals. The following tests clearly indicate that such solid phase has a great potential when it comes to improving an overall process yield and when it comes to improving sustainability.

In a first test, 1, the solid fraction was pressed in a standard fruit press used to produce apple juice or similar to show that more water could be pressed out of the solid fraction. After pressing the solid fraction, a total solid content of 38,15wt% was reached in the solid remainder, see table 1 below.

In a second test, 2, the solid fraction was mixed for three minutes in a state-of-the-art knife-type blender at a temperature of 50 degrees and was thereafter pressed in a conventional screw press. In this test, the solid fraction had a total solid content of 24,39wt%. The, from the pressing, resulting liquid fraction had a total solid content of 18,43wt%, see table 1 below.

In a third test, 3, the solid fraction was diluted with water, 2:1, and mixed for three minutes in a state-of-the-art knife-type blender at a temperature of 50 degrees and was thereafter pressed in a conventional screw press. In this test, the solid fraction had a total solid content of 26,35wt%. The, from the pressing, resulting liquid fraction had a total solid content of 23,19wt% and a protein content of 6,4wt%, see table 1 below.

In a fourth test, 4, the solid fraction was treated with cellulase, in form of Celliclast^{™} from Novozymes. The cellulase was dosed in the range of 0,1 to 0,2wt% of the total solid content of the solid fraction. The solid fraction including the cellulase was then mixed for 60 minutes in a state-of-the-art knife-type blender at a temperature of 50 degrees and was thereafter pressed in a conventional screw press. In this test, the solid fraction had a total solid content of 40,75wt%. The, from the pressing, resulting liquid fraction had a total solid content of 34,05wt% and a protein content of 8,8wt%, see table 1 below.

Some examples of cellulase include endoglucanase, exoglucanase (Cellobiohydrolase), β-glucosidase and hemicellulose.

In a fifth test, 5, the solid fraction was diluted with water, 2:1, and treated with cellulase, in form of Celliclast^{™} from Novozymes. The cellulase was dosed in the range of 0,1 to 0,2wt% of the total solid content of the solid fraction. The solid fraction including the cellulase was then mixed for 60 minutes in a state-of-the-art knife-type blender at a temperature of 50 degrees and was thereafter pressed in a conventional screw press. In this test, the solid fraction had a total solid content of 25,87wt%. The, from the pressing, resulting liquid fraction had a total solid content of 21,29wt% and a protein content of 5,9wt%. The total solid content of the solid remainder after pressing was 47,76wt%. The solid fraction had a protein content of 13,5wt% after dilution and the protein content in the solid remainder after pressing was 20,3wt%, see table 1 below.

**Table 1**

| **Test** | **1** | **2** | **3** | **4** | **5** |
|---|---|---|---|---|---|
| Dilution | No | No | 2:1 | No | 2:1 |
| Enzyme | No | No | No | Cellulase | Cellulase |
| Mixing time (min) | 0 | 3 | 3 | 60 | 60 |
| Mixing temp (°C) | n/a | 50 | 50 | 50 | 50 |
| Total solid content of solid fraction after dilution (wt%) | n/a | 24,39 | 26,35 | 40,75 | 25,87 |
| Total solid content of liquid fraction after pressing (wt%) | | 18,43 | 23,19 | 34,05 | 21,91 |
| Total solid content of solid remainder after pressing (wt%) | 38,15 | | | | 47,76 |
| Proteins in solid fraction after dilution (wt%) | | | | | 13,5 |
| Proteins in liquid fraction after pressing (wt%) | | | 6,4 | 8,8 | 5,9 |
| Proteins in solid remainder after pressing (wt%) | | | | | 20,3 |

As can be seen from the values of table 1, for example in test 3 it has been demonstrated that it is possible to achieve as much as 6,4wt% of proteins in the liquid fraction after pressing Similarly, in test 4 it has been demonstrated that it is possible to achieve as much as 8,8wt% of proteins in the liquid fraction after pressing. Similarly, in test 5 it has been demonstrated that it is possible to achieve as much as 5,9wt% of proteins in the liquid fraction after pressing.

All proteins in the liquid fraction after pressing are generally wasted in state-of-the-art oat-based precursor production lines when discarding the solid fraction which was the start material for all tests in table 1 above. This means in practice that all proteins present in the liquid fraction after pressing may be used to form an oat-based precursor rather than just being discarded by simply being wasted. In other words, the potential of the present inventive concept has been demonstrated to satisfaction. More specifically it has been demonstrated that the inventive concept may significantly increase the protein yield when producing oat-based precursors or oat-based foodstuff, such as oat-based beverages.

Further, it has through test 5 been demonstrated that it is possible to increase the total solid content of the solid remainder after pressing to almost 48wt%.

To put the above text in perspective it is worth mentioning that in a state-of-the-art production line for oat-based precursors, the solids yield is generally about 80% and the protein yield is generally about 35%. However, in the case where the solid fraction leaving the decenter is mixed with water and enzyme treated with cellulase and dewatered in a screw press, the solids yield may be increased to about 92% and the protein yield may be increased to about 59%.

It has also been shown in similar experiments that protein yield may be even further increased by additionally treating the solid fraction or the solid remainder after pressing with Proteas, e.g., Neutrase^{™} form Novozymes, dosed at 0.1-0.2wt% of the total solid contents of the remaining solid for 30 min at 55°C.

In fact, the protein yield may be increased to about 70% by the present invention.

Now that the potential of the inventive concept has been clearly demonstrated to the skilled reader, the method 100 and system 200 according to the present invention will be described in greater detail below.

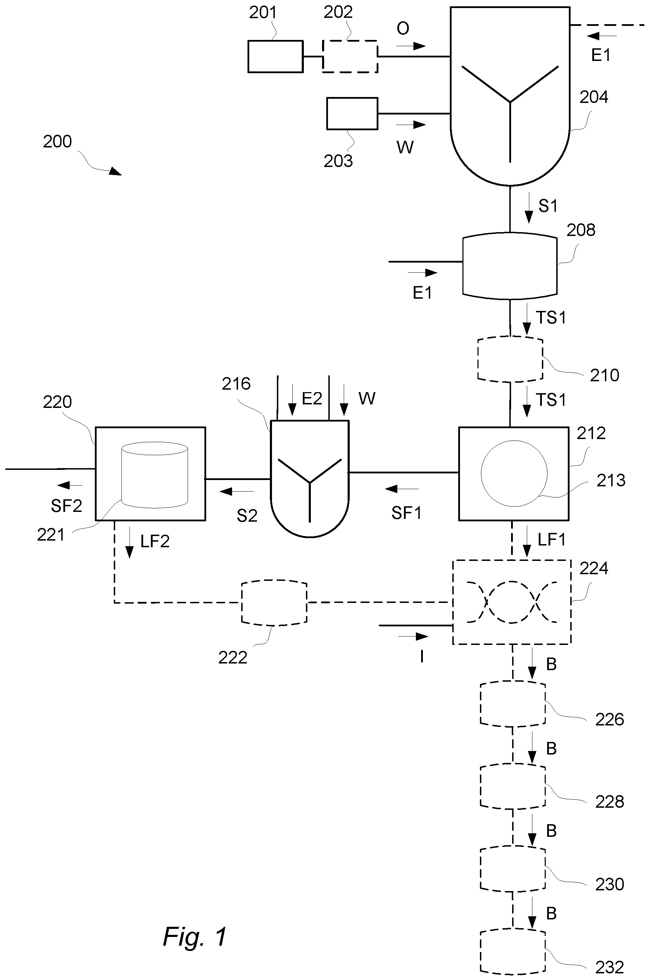

Now turning to Fig. 1. Fig. 1 schematically illustrates by way of example an exemplary system 200 for producing a first oat-based precursor LF1 and a second oat-based precursor LF2. The depicted system comprises a plurality of stations and process equipment of which some are optional. Such optional stations and process equipment are depicted with dashed lines in Fig. 1 to clearly indicate the optional nature thereof.

To convey material through the system 200, one or more flow control devices may be provided. For example, the illustrated system 200 may include one or more pumps employed at various locations in the system 200. In addition, one or more valves, or other similar flow control devices, may be utilized at various locations throughout the system 200 to control the flow of material as desired.

More specifically, the depicted system comprises a first mixing station 204. The first mixing station 204 is configured to prepare a first slurry S1 by mixing at least an oat material O and water W. The first mixing station may include any type of conventional mixer such as a knife-based blender.

The first mixing station 204 may typically receive the oat material O from a reservoir 201 or hopper 201. The system may additionally include a grinder 202 configured to grind the oat material O before reaching the first mixing station 204.

The first mixing station 204 may typically receive water W from a water supply 203 or a water tank 203.

In the first mixing station, the first slurry S1 is prepared by mixing the oat material O and the water W. Other ingredients may additionally by added to the first mixing station 204. The oat material O and the water W may be mixed according to known techniques commonly employed for the oat material O and the water W.

The first slurry S1 prepared in the first mixing station may according to an example have a protein concentration of 0,3wt% - 4wt%, preferably 1wt% - 3wt%.

A first treatment station 208, configured to treat the first slurry S1 with a first enzyme E1 is located downstream the first mixing station 204. The first treatment station 208 may according to an example include a vessel configured to hold the first slurry S1 during the enzyme treatment. The first treatment station 208 may according to an example include a heater configured to heat the first slurry S1 during the enzyme treatment. Hence, the first slurry S1 may be treated with a first enzymes E and/or with heat. The treatment with enzymes and/or heat may be performed according to known techniques commonly employed for the first slurry S1.

According to an example, the first slurry S1 may be treated with a first enzyme E1 or with one or more first enzymes E1. Such first enzymes may include one or more of alfa amylase, beta amylase and glucosidase. The first enzymes E1 may e.g., hydrolyze the oat-based material in the first slurry S1 to cut starch and create sugars.

Although first enzyme E1 or enzymes are shown as being added to the first treatment station 208, the first enzyme E1 or enzymes may also be added directly to the first mixing station 204 as indicated by a hatched arrow in Fig. 1. The first treatment station 208 may then be used for enzyme deactivation.

A first separation station 212, configured to separate the treated first slurry TS1 into a first solid fraction SF1, and a first liquid fraction LF1 that forms the first oat-based precursor LF1 is located downstream the first mixing station 204. The first separation station 212 may according to an example include a centrifugal separator 213. The centrifugal separator 213 may be a decanter. Other types of separators may be used to advantage.

The first liquid phase LF1 may according to an example have a protein concentration of 0,6wt% - 2wt%, preferably 0,8wt% - 1,1wt%.

An enzyme deactivation tank 210 may be located downstream the first treatment station 208 but upstream the first separation station 212. The enzyme deactivation tank 210 may be a conventional enzyme deactivation system, which may comprise a heat exchanger. Enzyme deactivation may be performed according to known techniques commonly employed when producing oat-based products such as oat-based precursors.

The depicted system 200 of Fig. 1 further comprises a second mixing station 216. The second mixing station 216 is configured to prepare a second slurry S2 by mixing the first solid fraction SF1 with one or more of a second enzyme E2 and water W. In other words, the second slurry S2 may be prepared by mixing the first solid fraction SF1 with a second enzyme E2. The second slurry S2 may be prepared by mixing the first solid fraction SF1 with water W. The second slurry S2 may be prepared by mixing the first solid fraction SF1 with a second enzyme E2 and water W.

The mixing of the first solid fraction SF1 with one or more of a second enzyme E2 and water W may according to an example be performed for a time of 5-120 min at a temperature of 20-70°C, alternatively for a time of 10-40 min at a temperature of 40-65°C. The mixing of the first solid fraction SF1 with one or more of a second enzyme E2 and water W may according to another example be performed for a time of 30 min at a temperature of 50°C.

The second slurry S2 prepared in the second mixing station may according to an example have a protein concentration of 5wt% - 20wt%, preferably 8wt% - 17wt%.

The first solid fraction SF1 may hence be fed from the first separation station 212 to the second mixing station 216, as depicted in Fig. 1.

The second mixing station 216 may include a mixer, such as a state-of-the-art knife-based blender or a high shear mixer. The second mixing station 216 of Fig. 1 is configured to receive water W and a second enzyme E2.

According to an example, a first second enzyme E2 or one or more second enzymes E2 may be mixed with the first solid fraction SF1 in in the second mixing station 216. Such first enzymes may include one or more cellulase and protease. Cellulase may be added in form of Celliclast^{™} from Novozymes. The cellulase may according to an example be dosed in the range of 0,1 to 0,2wt%, or even 0,1 to 1.0wt%, of the total solid content of the second slurry S2. Proteas may be added in form of Neutrase^{™} form Novozymes. The proteas may according to an example be dosed in the range of 0,1 to 0,2wt%, or even 0,1 to 1.0wt%, of the total solid content of the second slurry S2.

The second mixing station 216 may according to an example include a heater configured to heat the second slurry S2 being prepared therein.

A second separation station 220 configured to separate the second slurry S2 into a second solid fraction SF2, and a second liquid fraction LF2 that forms the second oat-based precursor LF2 is located downstream the second mixing station 216.

The second liquid phase LF2 may according to an example have a protein concentration of 4wt% - 10wt%, preferably 5wt% - 8wt%.

The solid content of the second solid fraction SF2 may according to an example be larger than a solid content of the first solid fraction SF1.

The second separation station 220 may according to an example include a mechanical dewatering press 221. The mechanical dewatering press 221 may include a screw press 221. A screw press 221 is a type of press which may subject the second slurry to a relatively speaking high pressure, meaning that a relatively speaking large amount of the second liquid fraction LF2 that forms the second oat-based precursor may be squeezed out of the second slurry S2. The second solid fraction SF2 may consequently get a relatively speaking high solid content my utilizing a screw press 221 in the second separation station 220. Other types of mechanical dewatering presses may be used to advantage in the second separation station 220.

The system 200 of Fig. 1 may optionally include a blending station 224, configured to blend the first oat-based precursor LF1, i.e., the first liquid fraction LF1, and the second oat-based precursor LF2, i.e., the second liquid fraction LF2, with one or more ingredients I to form an oat-based beverage B. Such blending station 224 may thus be configured to receive the first liquid fraction LF1 from the first separation station 212 and to receive the second liquid fraction LF2 from the second mixing station 220. The blending station 224 may by any type of suitable state-of-the-art blending station 224. The blending with ingredients I may be performed according to known techniques such that an oat-based beverage B is formed.

By blending the first oat-based precursor LF1, i.e., the first liquid fraction LF1, and the second oat-based precursor LF2, i.e., the second liquid fraction LF2, in the blending station 224 an oat-based beverage O comprising also the second liquid fraction LF2 may be formed. Hence, the so formed oat-based beverage B may include valuable constituents that normally would have been wasted. Thus, the yield may be increased.

The system 200 may optionally include a batch or storage tank 222 configured to receive the second liquid fraction LF2 from the second mixing station 220. The batch or storage tank 222 may thus be located upstream the blending station 224 such that the second liquid fraction LF2 may be temporarily stored in the batch or storage tank 222 before being fed to the blending station 224. Temporary storage in the batch or storage tank 222 may be performed according to known techniques commonly employed for when producing oat-based precursors or oat-based products.

The system 200 may optionally include a heat treatment station 226 located downstream the blending station 224. Heat treatment in the heat treatment station 226 may be performed according to known techniques commonly employed for when producing oat-based precursors or oat-based products.

The system 200 may optionally include a homogenization station 228 located downstream the heat treatment station 226. Homogenization in the homogenization station 228 may be performed according to known techniques commonly employed for when producing oat-based precursors or oat-based products.

The system 200 may optionally include a cooling station 230 located downstream the homogenization station 228. Cooling in the cooling station 230 may be performed according to known techniques commonly employed for when producing oat-based precursors or oat-based products.

The system 200 may optionally include a filter station 232 located downstream the cooling station 230. Filtering in the filter station 232 may be performed according to known techniques commonly employed for when producing oat-based precursors or oat-based products.

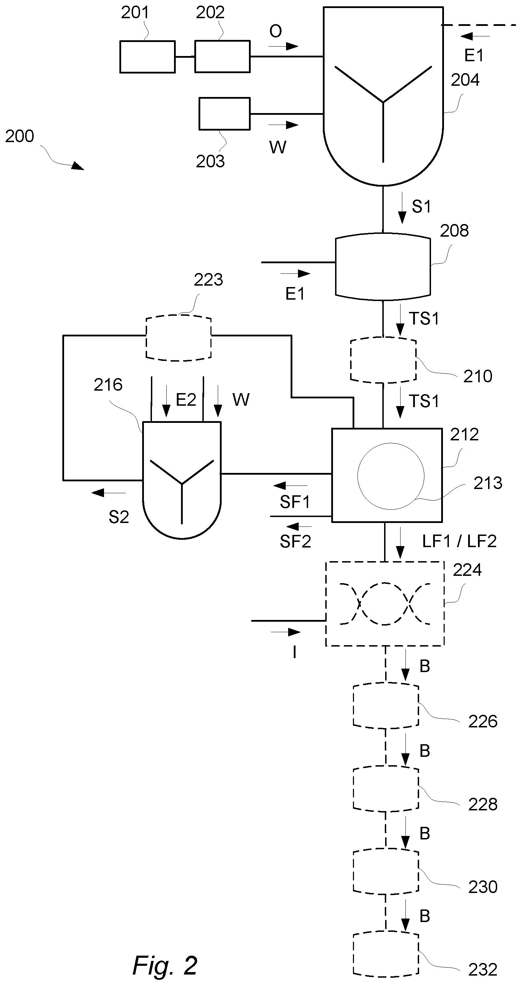

Now also turning to Fig. 2. Fig. 2 is an exemplary variant of the system 200 in Fig. 1. Hence, the exemplary variant system 200 of Fig. 2 is highly similar to the system of Fig. 1. Given this, only differences between the respective systems 200 will be described in the following to avid undue repetition.

In the system 200 of Fig. 2, the second separation station 220 has been omitted. The second slurry S2 may instead of being fed to a second separation station 220 be fed to back to the first separation station 212 as depicted in Fig. 2. This means that not just the treated first slurry TS1 may be separated in the first separation station 212 but also the second slurry S2 prepared in the second mixing station 216.

The separation of the second slurry S2 and the first treated slurry TS1 in the first separation station 212 may to advantage be made in a batch type fashion where the second slurry S2 and the first treated slurry TS1 are separated alternately. For this reason, a batch or storage tank 223 configured to receive and hold the second slurry may be located downstream the second mixing station 216. Hence, the batch or storage tank 223 may consequently temporarily hold the second slurry S1 e.g., when the first separation station 212 is occupied by separating the first treated slurry S1.

However, the second slurry S2 and the first treated slurry TS1 may be separated simultaneously in the first separation station 212.

By omitting the second separation station 220, an overall coast of the system 200 may be reduced.

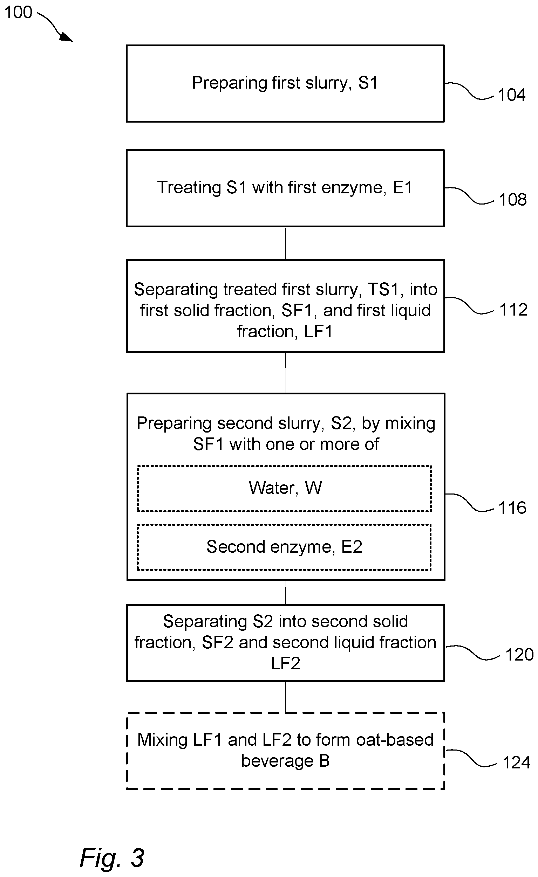

Now also turning to Fig. 3. A method 100 of producing a first oat-based precursor LF1 and a second oat-based precursor LF2 will be described.

The method (100) starts by preparing 104 a first slurry S1 by mixing at least an oat material O and water W.

The method 100 proceeds by treating 108 the first slurry S1 with a first enzyme E1. The first slurry S1 may be treated with a first enzyme E1 as have been described above in conjunction with Figs. 1 and 2..

The method 100 proceeds by separating 112 the treated first slurry TS1 into a first solid fraction SF1, and a first liquid fraction LF1 that forms the first oat-based precursor LF1. The treated first slurry TS1 may be separated into the first solid fraction SF1, and the first liquid fraction that forms the first oat-based precursor LF1 as have been described above in conjunction with Figs. 1 and 2.

The method 100 proceeds by preparing 116 a second slurry S2 by mixing the first solid fraction SF1 with one or more of a second enzyme E2 and water W. the second slurry S2 may be prepared by mixing the first solid fraction SF1 with one or more of the second enzyme E2 and water W as have been described above in conjunction with Figs. 1 and 2.

The preparing 116 of the second slurry S2 may comprise mixing the first solid fraction SF1 with 0-2 (zero to two) parts of water. Preferably, the second slurry S2 comprises 2 parts of the first solid fraction SF1, and one part of water W. The enzyme is added to this.

The method 100 proceeds by separating 120 the second slurry S2 into a second solid fraction SF2, and a second liquid fraction LF2 that forms the second oat-based precursor LF2. The second slurry S2 may be separated into the second solid fraction SF2, and the second liquid fraction LF2 that forms the second oat-based precursor LF2 as have been described above in conjunction with Figs. 1 and 2.

The method 200 may optionally proceed by mixing 124 the first oat-based precursor LF1 and the second oat-based precursor LF2 with one or more ingredients I to form an oat-based beverage B.

### Example 1

In the following an illustrative example, example 1, of how the first oat-based precursor LF1 and the second oat-based precursor LF2 may be formed will be described. Example 1 has been performed on a system 200 of the type described above in conjunction with Fig. 1 and hence while using the method 100 described in conjunction with Fig. 3. In order to make example 1 clearer and easier to follow, reference numerals form the above description of the system 200 and the method 100 have been introduced where appropriate. Example 1 is a mass-balance example and is provided to mainly demonstrate the amount of proteins that may be extracted or recovered from the first solid phase SF1, which is generally considered as waste. Example 1 is consequently provided as an example for illustration and not for limitation. All numbers in example 1 emanate from a specific instance of producing the first oat-based precursor LF1 and the second oat-based precursor LF2 and may as a result thereof only demonstrate a limited extent of the present invention as defined in the appended claims.

A first slurry S1 was prepared 104 at a rate of 8000 liters per hour from oat material O, in form of grinded oat kernels, and water W having a temperature of about 70°C. The preparation was made in a high shear mixer The prepared first slurry S1 had a mass of total solids of 1295 kg hour, a protein content of 2,1wt% and a protein mass of 170 kg per hour. A first enzyme E1 in form of a first group of enzymes being alpha amylase and at least one of glucosidase and beta-amylase, was also introduced in the mixer together with the oat material O and the water W.

The prepared first slurry S1 was then treated 108 by the first enzyme E1. Specifically, the treatment was performed at about 70°C, while circulating over a high shear mixer and a tank. When the oats were mixed with hot water, the starch in the oat started to gelatinize and swell, resulting in a dramatic increase in viscosity. The Alpha amylase was used at an early stage of this process to break down the starch and thereby decrease the viscosity. Glucosidase was then added to achieve the desired sweetness of the product, cutting off glucose and maltose units. When the desired levels of viscosity and sweetness was reached, the enzymatic activity was stopped by heating the first slurry at about 95°C for 80 seconds by indirect heat treatment.

The treated first slurry TS1 was fed to a first separation station 212 where it was separated 112 by a decanter 213 into the first solid fraction SF1, and the first liquid fraction LF1 that forms the first oat-based precursor LF1.

The flow of the first liquid fraction LF1, i.e., the first oat-based precursor LF1, was determined to be 7250 liters per hour. A total solid content of the first liquid fraction LF1 was 14wt%, a total solid flow was 1010 kg per hour, a protein content was 0,90wt% and protein flow was 65 kg per hour. This gives a solids yield of 78%.

The flow of the first solid fraction SF1 was determined to be 750 liters per hour. A total solid flow of the first solid fraction SF1 was 285 kg per hour and a protein flow was 105 kg per hour. In this regard it is important to note that a majority of the proteins emanating from the oat material O ends up in the first solid fraction SF1, which is generally considered as waste, after the first separation station 212.

A second slurry S2 was prepared 116 from the first solid fraction SF1, a second enzyme E2 and water W at a second mixing station 216. The water W was added at a rate of 500 liters per hour. The second enzyme E2 was added in form of Cellulase and mixing was then performed at a temperature of 50 °C for a duration of 5 min, using a conventional blender.

The second slurry S2 was then fed to a second separation station 223 and separated 120 into the second solid fraction SF2, and the second liquid fraction LF2 that forms the second oat-based precursor LF2. The separation at the second separation station 223 was performed with a screw press.

The flow second liquid fraction LF2, i.e., the second precursor LF2 was determined to be 990 liters per hour. A total solid flow of the second liquid fraction LF2 was 170 kg per hour, a protein content was 6.0wt% and a protein flow was 55 kg per hour.

The flow of the second solid fraction SF1 was determined to be 260 liters per hour. A total solid flow of the first solid fraction SF1 was 115 kg per hour a protein content was 19wt% and protein flow was 50 kg per hour.

Hence, 55kg of proteins per hour that generally would have been wasted were included in the second oat-based precursor LF2. This figure could be compared to the 65 kg of proteins per hour that were included in the first oat-based precursor LF1. In conclusion, it has by example 1 been illustrated that protein yield may in practice almost be doubled by the present invention.

Selected relevant figures of example 1 are illustrated in table 2 below.

**Table 2**

| | Input (S1) | Output (LF1) | Output (LF2) | Output (SF2) |
|---|---|---|---|---|
| Mass solids (kg/hr) | 1295 | 1010 | 170 | 115 |
| Mass proteins (kg/hr) | 170 | 65 | 55 | 50 |
| Protein distribution (%) | 100 | 38.2 | 32.4 | 29.4 |
| Mass protein content (dry matter, wt%) | 13.1 | 6.4 | 32.4 | 43.5 |

In Table 2, the mass of solids and the mass of proteins are measured based on the dry content only, i.e., the weight of liquid is not included. Thus, the measurements refer to the dry matter, excluding any liquid content.

As have been described in detail above, the method 100 and the system 200 may be used to significantly increase the yield when producing oat-based precursors or oat-based food stuff such as oat-based beverages. Example 1, although being a single example, shows that the protein yield may be increased by 84% by extracting about 70% (38.2%+32.2%) of the proteins emanating from the oat material O instead of 38%.

In the method, the cellulase enzyme plays a role in extracting proteins from the second slurry, which was an unexpected outcome. Typically, cellulase is used to break down cellulose fibers rather than for protein extraction. However, it is believed that by breaking down the cellulose structure, the enzyme helped release liquid trapped within the fibers. This liquid, surprisingly, contained a significant amount of protein. Instead of relying on enzymes like proteases to directly release proteins, this method leverages the breakdown of fibers to release liquid, which in turn frees the proteins suspended in it. This represents a novel and efficient approach for protein extraction, proving to be particularly effective in maximizing protein yield.

Additionally, it was observed that pressing the second slurry to obtain the second liquid fraction, while simultaneously stirring or "agitating" it, helped maximize protein yield. To achieve both pressing and movement of the second slurry, the second separation station may incorporate a screw press, or a roller system that moves the slurry between rollers while applying pressure. Examples of the latter include belt press filters, also known as roller press filters, which effectively combine pressing and movement to enhance protein extraction. By adding movement to the pressing, such as using a screw press instead of a linear press, the protein yield increased by approximately 14%.

It was observed that the protein yield was unexpectedly high even without cellulase treatment or the combined "pressing and moving" technique, suggesting that some protein could be naturally released through basic processing (protein distribution of above 20%). However, the yield significantly increased when enzyme treatment, pressing, and/or stirring were introduced. The cellulase broke down fibers, releasing more liquid and protein, while pressing and stirring further enhanced this effect. The highest protein yield was achieved when both enzyme treatment and mechanical processes were applied together, demonstrating a synergistic improvement in protein extraction.

Using the method described herein, according to the first aspect, the second liquid fraction LF2 may comprise at least 15%, or at least 25%, or at least 30%, or even around 32% of the protein in the oat material O that is used for preparing the first slurry S1 by mixing the oat material O with water W.

In another aspect, the first liquid fraction LF1 may comprise at least 20%, or at least 30%, or at least 35%, or even around 38% of the protein in the oat material O used for preparing the first slurry S1.

In another aspect, the second solid fraction SF2 may comprise less than 50%, or less than 40%, or less than 35%, or even around 29% of the protein in the oat material O used for preparing the first slurry. Ideally, the lower the protein content in SF2, the better, as this indicates that more protein is present in the liquid fractions LF1 and LF2.

By harvesting the protein in both the second liquid fraction and the first liquid fraction, a substantial increase in protein yield has been achieved.

In another aspect, the solid matter of the second liquid fraction may comprise at least 15%, or at least 25%, or at least 30%, or even around 32%, proteins (the mass protein content).

It will be appreciated that the present inventive concept is not limited to the variants and examples shown. Several modifications and variations are thus conceivable within the scope of the invention which thus is defined by the appended claims.

## Claims

1. A method (100) of producing a first oat-based precursor (LF1) and a second oat-based precursor (LF2), the method (100) comprising:
preparing (104) a first slurry (S1) by mixing at least an oat material (O) and water (W),
treating (108) the first slurry (S1) with a first enzyme (E1),
separating (112) the treated first slurry (TS1) into a first solid fraction (SF1), and a first liquid fraction (LF1) that forms the first oat-based precursor (LF1),
preparing (116) a second slurry (S2) by mixing the first solid fraction (SF1) with one or more of a second enzyme (E2) and water (W),
separating (120) the second slurry (S2) into a second solid fraction (SF2), and a second liquid fraction (LF2) that forms the second oat-based precursor (LF2).

2. The method (100) according to claim 1, comprising
mixing (124) the first oat-based precursor (LF1) and the second oat-based precursor (LF2) with one or more ingredients (I) to form an oat-based beverage (B).

3. The method (100) according to any one of the preceding claims, wherein the separating (112) of the treated first slurry (TS1) into the first solid fraction (SF1) and the first liquid fraction (LF1) is performed at a first separation station (212).

4. The method (100) according to claim 3, wherein the separating (120) of the second slurry (S2) into the second solid fraction (SF2) and the second liquid fraction (LF2) is performed at a second separation station (220) that is different from the first separation station (212).

5. The method (100) according to claim 4, wherein the second separation station (220) comprises a mechanical dewatering press (221), such as a screw press.

6. The method (100) according to claim 3, wherein the separating (120) of the second slurry (S2) into the second solid fraction (SF2) and the second liquid fraction (LF2) is performed at the first separation station (212).

7. The method (100) according to any one of the preceding claims, wherein the treating (108) of the first slurry (S1) with a first enzyme (E1) comprises treating the first slurry (S1) with one or more of alfa amylase, beta amylase and glucosidase.

8. The method (100) according to any one of the preceding claims, wherein the preparing (116) of the second slurry (S2) comprises mixing the first solid fraction (SF1) with a cellulase.

9. The method (100) according to any one of the preceding claims, wherein the first slurry (S1) has a protein concentration of 0,3wt% - 4wt%, preferably 1wt% - 3wt%, and wherein the second slurry (S2) has a protein concentration of 5wt% - 20wt%, preferably 8wt% - 17wt%.

10. The method (100) according to any one of the preceding claims, wherein the first liquid phase (LF1) has a protein concentration of 0,6wt% - 2wt%, preferably 0,8wt% - 1,1wt%, and wherein the second liquid phase (LF2) has a protein concentration of 4wt% - 10wt%, preferably 5wt% - 8wt%.

11. The method (100) according to any one of the preceding claims, wherein a solid content of the second solid fraction (SF2) is larger than a solid content of the first solid fraction (SF1).

12. A system (200) for producing a first oat-based precursor (LF1) and a second oat-based precursor (LF2), the system (200) comprising:
a first mixing station (204), configured to prepare a first slurry (S1) by mixing at least an oat material (OM) and water (W),
a first treatment station (208), configured to treat the first slurry (S1) with a first enzyme (E1),
a first separation station (212), configured to separate the treated first slurry (TS1) into a first solid fraction (SF1), and a first liquid fraction (LF1) that forms the first oat-based precursor (LF1),
a second mixing station (216), configured to prepare a second slurry (S2) by mixing the first solid fraction (SF1) with one or more of a second enzyme (E2) and water (W),
a second separation station (220) configured to separate the second slurry (S2) into a second solid fraction (SF2), and a second liquid fraction (LF2) that forms the second oat-based precursor (LF2).

13. The system (200) according to claims 12, wherein the system (200) further comprises a blending station (224), configured to blend the first oat-based precursor (LF1) and the second oat-based precursor (LF2) with one or more ingredients (I) to form an oat-based beverage (B).

14. The system (200) according to claim 12 or 13, wherein the second separation station (220) and the first separation station (212) are the same separation station (212).

15. The system (200) according to claim 12 or 13, wherein the first separation station (212) comprises a centrifugal separator (213), such as a decanter, and/or wherein the second separation station (220) comprises a mechanical dewatering press (221), such a screw press.
